# FASCICULE DE BREVET EUROPEEN

(11) **EP 1 530 577 B1**
(45) Date de publication et mention de la délivrance du brevet: **01.03.2006**
(21) Numéro de dépôt: 03787844.4
(22) Date de dépôt: 07.07.2003
(51) Int. Cl.: C07F 9/40, C07F 9/30, C07F 9/32, C07F 9/09, C07F 9/38, C08K 5/521, C08K 5/5313, C08K 5/5317

(54) **COMPOSES ORGANOPHOSPHORES A PONT POLYSULFURE**
ORGANOPHOSPHOR-VERBINDUNGEN MIT POLYSULFID-BRÜCKE
ORGANOPHOSPHOROUS COMPOUNDS HAVING POLYSULFIDE BRIDGE

(30) Priorité: 26.07.2002 FR 0209528
(43) Date de publication de la demande: 18.05.2005
(73) Titulaire: CENTRE NATIONAL DE LA RECHERCHE SCIENTIFIQUE, 75016 Paris (FR); UNIVERSITE MONTPELLIER II SCIENCES ET TECHNIQUES DU LANGUEDOC, F-34095 Montpellier Cédex (FR)
(72) Inventeur: MUTIN, Hubert, F-34830 CLAPIERS (FR)
(74) Mandataire: Sueur, Yvette
(86) Numéro de dépôt international: PCT/FR2003/002104
(87) Numéro de publication internationale: WO 2004/016630

(56) Documents cités:
- EP-A- 1 157 994
- FR-A- 2 149 339
- US-A- 3 979 369
- US-A- 4 386 185

## Description

La présente invention concerne des composés organophosphorés à pont polysulfure, leur procédé de préparation, et leur utilisation comme agent de couplage entre une charge minérale ou une charge métallique, et un élastomère.

Il est connu d'utiliser des agents de couplage dans les procédés visant à renforcer des matrices polymères par des particules minérales. On peut citer notamment les silanes répondant à la formule (RO)₃Si(CH₂)ₙSₘ(CH₂)ₙSi(OR₃) dans laquelle R = Et ou Me, n = 2 ou 3, m = 2 ou 4 (DE2141159), ou dans laquelle R = Et, n = 2 ou 3, m = 2 ou 4 (DE3311340) ou dans laquelle R = Et, n = 3, m = 4 (DE10015308). L'amélioration des propriétés mécaniques provient de l'augmentation de l'adhésion entre la matrice polymère et la charge minérale. Ces agents de couplage du type silane sont particulièrement efficaces lorsque les particules minérales sont la silice ou des argiles. Toutefois, l'amélioration des propriétés mécaniques de la matrice est moindre lorsque la charge minérale contient par exemple de l'oxyde de titane ou du carbonate de calcium et l'adhésion avec des surfaces métalliques est faible.

Il est en outre connu que l'utilisation de composés du type phosphate, phosphonate ou phosphinate, en remplacement des composés du type organosilane, permet une bonne adhésion du composé phosphate sur des matériaux minéraux tels que les oxydes de métal ou des surfaces métalliques. Par exemple, G. Guerrero, et al, [(2001), J. Mater. Chem, 11(12), 3161-31-65] décrit le greffage d'acide phényl phosphonique ou de ses esters d'éthyle ou de triméthylsilyle sur l'alumine. G. Guerrero, et al, [(2001), Chem. Mater., 13 : 4367-4373] décrit le greffage d'acide phényl phosphonique ou d'acide phényl phosphinique ou de leurs esters d'éthyle ou de triméthylsilyle sur TiO₂. La formation de monocouches d'acide phosphonique sur des surfaces métalliques d'acier, d'aluminium, de cuivre ou de laiton est décrite par J.G. Alsten [Langmuir, (1999) 15 : 7605-7614]. T. Nakatsuka [Polym. Prep., Am. Chem. Soc., Div. Polym. Chem., (1983) 24(1) 202-203] décrit le greffage de divers phosphates, notamment de (HO)₂P(O)-OC₈H₁₇ sur CaCO₃. L'utilisation d'un additif du type mercaptoalkylphosphonate dans des compositions d'élastomère qui contiennent de la silice est décrite dans US-4,386,185 ; l'additif est un phosphonate (RO)₂P(O)-(CR'₂)ₙSH, R étant un alkyle, un cycloalkyle ou un arylalkyle, R' est H ou un alkyle, n est de 1 à 8. La préparation de composés phosphorés, utilisés comme catalyseurs, est décrite dans EP-1157994 ; les composés répondent à la formule (MO)ₘP(O)(OX)ₙ(R)ₚ[-(O)ₓ-(Z-A)]_{q} dans laquelle M est un cation monovalent, m+n+p+x = 3, R = hydrocarbone, X = hydrocarbone ou trialkylsilane, A peut contenir du soufre provenant par exemple d'un thiol ou un groupe SO₃.

Il est connu que l'utilisation de composés du type monoalcoxytitanates comme agent de couplage permet d'augmenter la quantité de charge minérale ajoutée à un matériau thermoplastique, sans nuire à sa fluidité (S. Monte, et al, (1976) Proc., Annu. Conf., Reinf. Plast./Compos. Inst., Soc. Plast. Ind. 31 6-E).

On connaît par ailleurs des composés du type tétrasodium 2,2'-(dithiobis)éthanephosphonate utiles comme médicament (W09814426) et des dithioéthers du type (HO)₂P(O)-(CH₂)ₘS₂-(CH₂)ₘ-P(O) (OH)₂ utiles pour réduire l'effet toxique du carboplatine (WO9811898). On connaît en outre l'utilisation de disulfures comprenant des groupes terminaux du type éthylphosphonate, comme additif de lubrification des carburants (GB1189304)

Le but de la présente invention est de fournir des composés utiles comme agents de couplage entre une matrice polymère et une charge minérale ou métallique, présentant des propriétés améliorées, notamment avec des charges minérales autres que les silices.

La présente invention a pour objet des composés qui répondent à la formule :

(RO)₂₋ₜR¹ ₜP(O)-Oₓ-(CH₂)_{y}-S_{z}-(CH₂)_{y}-Oₓ-P(O) (OR)₂₋ₜR¹ ₜ (I)

dans laquelle :
- R représente un hydrogène, un alkyle, un aryle, un trialkylsilyle, un trialkylamino ou un métal alcalin ;
- R¹ représente un alkyle ou un aryle ;
- x est 0 ou 1 ;
- y est un nombre entier de 1 à 22, de préférence de 2 à 4 ;
- z ≥ 3 ;
- t est 0 ou 1.

Dans les composés de l'invention, lorsque R est un groupe alkyle, il est de préférence choisi parmi les radicaux alkyles ayant de 1 à 6 atomes de carbone. Lorsque R est un groupe aryle, il est de préférence choisi parmi le phényle, le benzyle et le tolyle. Le groupe trialkylsilyle est de préférence un groupe R'₃Si- dans lequel les substituants R' représentent des groupes alkyles identiques ou différents ayant de 1 à 3 atomes de carbone. Le groupe trialkylamino est de préférence un groupe R"₃N- dans lequel les substituants R" représentent des groupes alkyles identiques ou différents ayant de 1 à 5 atomes de carbone. Lorsque R est un métal alcalin, on préfère en particulier Na et K.

Le substituant R¹ est de préférence un radical alkyle ayant de 1 à 18 atomes de carbone, ou un radical aryle choisi parmi le phényle, le benzyle et le tolyle.

Parmi les composés de l'invention, on peut distinguer les composés pour lesquels x = 0, c'est-à-dire les phosphonates (RO)₂P(O)-(CH₂)_{y}-S_{z}-(CH₂)_{y}-P(O)(OR)₂ (II) et les phosphinates (RO)R¹P(O)-(CH₂)_{y}-S_{z}-(CH₂)_{y}P(O)(OR)R¹ (IV).

On peut en outre citer les composés dans lesquels x = 1, c'est-à-dire les phosphates (RO)₂P(O)-O-(CH₂)_{y}-S_{z}-(CH₂)_{y}-O-P(O)(OR)₂ (III) et (RO)R¹P(O)-O-(CH₂)_{y}-S_{z}-(CH₂)_{y}-O-P(O)(OR)R¹ (V).

Parmi ces composés, on préfère tout particulièrement ceux qui ont un nombre moyen d'atomes de soufre z compris entre 3 et 5, et plus particulièrement les composés dans lesquels z est en moyenne égal à 4.

Les composés selon l'invention peuvent être préparés par des procédés mettant en oeuvre des réactions classiques de la chimie du soufre et du phosphore. Quelques cas particuliers sont indiqués ci-dessous.

Les composés phosphonates correspondant à la formule (II) dans laquelle z = 4 et R est un alkyle Ra peuvent être préparés par exemple par le procédé suivant :
- au cours d'une première étape, on fait régir le trialkylphosphite P(ORa)₃ (VI) avec le dibromoalcane Br-(CH₂)_{y}-Br (VII) à une température de l'ordre de 140°C pour obtenir Br-(CH₂)_{y}-P(O)(ORa)₂ (VIII)
- au cours d'une seconde étape, on fait réagir le phosphonate Br-(CH₂)_{y}-P(O) (ORa)₂ (VIII) avec Na₂S₄ sous reflux du méthanol. L'on obtient un produit dont la composition moyenne correspond à la formule

   (RaO)₂P(O)-(CH₂)_{y}-S₄-(CH₂)_{y}-P(O)(ORa)₂ (IIa)

dans laquelle Ra est un alkyle.

Un phosphinate (IVa) correspondant à la formule (IV) dans laquelle R est Ra et z = 4 peut être obtenu par un procédé similaire, en remplaçant lors de la première étape, le réactif P(ORa)₃ (VI) par un réactif P(ORa)₂R¹ (IX).

Un phosphonate, qui correspond à la formule (II) dans laquelle z = 4 et R est un trialkylsilyle R'₃Si, peut être obtenu en faisant réagir le composé (IIa) avec un bromure de trialkylsilane R'₃SiBr selon le schéma réactionnel suivant :

(RaO)₂P(O)-(CH₂)_{y}-S₄-(CH₂)_{y}-P(O)(ORa)₂ + 4 R'₃Si → (R'₃SiO)₂P(O)-(CH₂)_{y}-S₄-(CH₂)_{y}-P(O)(OSiR')₂ (IIb)

Un composé (HO)₂P(O)-(CH₂)_{y}-S₄-(CH₂)_{y}-P(O)(OH)₂ (IIc) , qui correspond à la formule (II) dans laquelle z = 4 et R est H, peut être obtenu soit par hydrolyse du composé (IIa) correspondant, soit par hydrolyse ou par alcoolyse du composé (IIb) correspondant. L'hydrolyse du composé (IIb) est une méthode douce, particulièrement préférée.

Un phosphate (IIIa) correspondant à la formule moyenne (III) dans laquelle R est H peut être obtenu par un procédé dans lequel :
- au cours d'une première étape, on fait réagir P(O)Cl₃ avec un composé HO(CH₂)_{y}Cl en proportions stoechiométriques pour obtenir le composé Cl(CH₂)_{y}OP(O)Cl₂ ;
- au cours d'une deuxième étape, on hydrolyse le composé Cl(CH₂)_{y}OP(O)Cl₂ pour obtenir le composé Cl(CH₂)_{y}OPO₃H₂ ;
- au cours d'une troisième étape, on fait réagir Cl(CH₂)₃OPO₃H₂-_{y}OPO₃H₂ avec Na₂S₄ sous reflux du méthanol, puis on fait un échange d'ions pour obtenir le composé (HO)₂P(O)-O-(CH₂)_{y}-S₂-CH₂)_{y}-O-P(O)(OH)₂.

Le schéma réactionnel correspondant à ce procédé est le suivant :

P(O)Cl₃ + HO(CH₂)_{y}Cl ⇐ Cl(CH₂)_{y}OP(O)Cl₂ + HCl

Cl(CH₂)_{y}OP(O)Cl₂ + 2 H₂O ⇐ Cl(CH₂)_{y}OPO₃H₂ + 2 HCl

1) MeOH, reflux

   2 Cl(CH₂)_{y}OPO₃H₂ + Na₂S₄ ⇐ H₂O₃PO(CH₂)_{y}-S₄-(CH₂)_{y}OPO₃H₂ + 2 NaCl
2) échange d'ions

Les composés organophosphorés de la présente invention sont utilisables comme agents de couplage entre des charges minérales et des élastomères, dans les domaines techniques dans lesquels des charges sont utilisées pour améliorer les propriétés des élastomères. Bien que les composés dans lesquels R est un trialkylsilane soient sensibles à l'hydrolyse, ils peuvent néanmoins être utilisés comme agents de couplage. Parmi les charges minérales, on peut citer notamment les oxydes, les hydroxydes et les carbonates, tels que par exemple la silice, l'alumine, l'oxyde de titane, les silicoaluminates et les argiles. On peut également citer les matériaux métalliques tels que les aciers, le cuivre et l'aluminium.

La présente invention est décrite plus en détail par les exemples qui sont donnés ci-après à titre d'illustration, mais auxquels elle n'est cependant pas limitée.

### Exemple 1

### Préparation de (EtO)₂P(O)-(CH₂)₃-S₄-(CH₂)₃-P(O)(OEt)₂

Au cours d'une première étape, on a préparé le diéthyl-3-bromopropylphosphonate (EtO)₂P(O)-(CH₂)₃-Br de la manière suivante. Dans un réacteur sous atmosphère d'azote, on a introduit 1 équivalent de triéthylphosphite P(OEt)₃ et 1,5 équivalent de 1,3-dibromopropane. Le réacteur a été porté à 140°C et maintenu à cette température sous agitation pendant 15 heures. Après distillation, on a obtenu le composé (EtO)₂P(O)-(CH₂)₃-Br avec un rendement de 60% par rapport au triéthylphosphite introduit.

Ensuite, dans un réacteur sous atmosphère d'azote, on a introduit 1,71 g de Na₂S₄ et 20 ml de méthanol anhydre. Le réacteur a été chauffé jusqu'au reflux du méthanol, et on a ajouté goutte à goutte 5 g (2 équivalents) de (EtO)₂P(O)-(CH₂)₃-Br dissous dans 20 ml de méthanol anhydre. Après ½ heure de reflux, le réacteur a été refroidi jusqu'à la température ambiante. Après séparation du précipité de NaBr, évaporation sous vide et filtration, on a ajouté 30 ml de toluène anhydre. Après filtration et évaporation sous vide, on a obtenu 3,7 g d'une huile jaune. La formation de (EtO)₂P(O)-(CH₂)₃-S₄-(CH₂)₃-P(O)(OEt)₂ avec un rendement de 76% est confirmée par RMN du proton et par l'analyse élémentaire.

### Exemple 2

### Préparation de (Me₃SiO)₂P(O)-(CH₂)₃-S₄-(CH₂)₃-P(O)(OSiMe₃)₂

Dans un réacteur sous atmosphère d'azote, on a introduit 5 g de (EtO)₂P(O)-(CH₂)₃-S₄-(CH₂)₃-P(O)(OEt)₂ (obtenu selon le procédé de l'exemple 1) dans 20 ml de dichlorométhane. On a ajouté 8 g de Me₃SiBr et le mélange réactionnel a été agité à température ambiante pendant 10 heures. Après évaporation sous vide, on a obtenu 6,6 g d'une huile jaune. La RMN du proton et l'analyse élémentaire confirment la formation de (Me₃SiO)₂P(O)-(CH₂)₃-S₄-(CH₂)₃-P(O)(OSiMe₃)₂.

### Exemple 3

### Préparation de (HO)₂P(O)-(CH₂)₃-S₄-(CH₂)₃-P(O)(OH)₂

Dans un réacteur, on introduit 5 g du composé (Me₃SiO)₂P(O)-(CH₂)₃-S₄-(CH₂)₃-P(O)(OSiMe₃)₂ obtenu selon le procédé de l'exemple 2, et on a ajouté 30 ml de méthanol. Après agitation à 40°C pendant 6 heures et évaporation sous vide, on a obtenu 2,9 g d'un solide jaune. La RMN du proton et l'analyse élémentaire confirment la formation de (HO)₂P(O)-(CH₂)₃-S₄-(CH₂)₃-P(O)(OH)₂.

## Revendications

1. Composé répondant à la formule
(RO)₂₋ₜR¹ ₜP(O)-Oₓ-(CH₂)_{y}-S_{z}-(CH₂)_{y}-Oₓ-P(O)(OR)₂₋ₜR¹ ₜ (I)
dans laquelle :
• R représente un hydrogène, un alkyle, un aryle, un trialkylsilyle, un trialkylamino, ou un métal alcalin,
• R¹ représente un alkyle ou un aryle
• x est 0 ou 1
• y est un nombre entier de 1 à 22,
• z ≥ 3
• t est 0 ou 1.

2. Composé selon la revendication 1, **caractérisé en ce que** R est un radical alkyle ayant de 1 à 6 atomes de carbone.

3. Composé selon la revendication 1, **caractérisé en ce que** R est un groupe trialkylsilyle R'₃Si- dans lequel les substituants R' représentent des groupes alkyles identiques ou différents ayant de 1 à 3 atomes de carbone.

4. Composé selon la revendication 1, **caractérisé en ce que** R est un groupe trialkylamino R"₃N- dans lequel les substituants R" représentent des groupes alkyles identiques ou différents ayant de 1 à 5 atomes de carbone.

5. Composé selon la revendication 1, **caractérisé en ce que** R est un métal alcalin choisi parmi Na et K.

6. Composé selon la revendication 1, **caractérisé en ce que** x = 0.

7. Composé selon la revendication 6, **caractérisé en ce qu'**il répond à la formule (RO)₂P(O)-(CH₂)_{y}-S_{z}-(CH₂)_{y}-P(O)(OR)₂ (II).

8. Composé selon la revendication 6, **caractérisé en ce qu'**il répond à la formule (RO)R¹P(O)-(CH₂)_{y}-S_{z}-(CH₂)_{y}-P(O)(OR)R¹ (IV).

9. Composé selon la revendication 1, **caractérisé en ce que** x = 1.

10. Composé selon la revendication 9, **caractérisé en ce qu'**il répond à la formule (RO)₂P(O)-O-(CH₂)_{y}-S_{z}-(CH₂)_{y}-O-P(O)(OR)₂ (III).

11. Composé selon la revendication 9, **caractérisé en ce qu'**il répond à la formule (RO)R¹P(O)-O-(CH₂)_{y}-S_{z}-(CH₂)_{y}-O-P(O)(OR)R¹ (V).

12. Composé selon la revendication 1, **caractérisé en ce que** z est en moyenne égal à 4.

13. Composé selon la revendication 1, **caractérisé en ce que** R¹ est un radical alkyle ayant de 1 à 18 atomes de carbone, ou un radical aryle choisi parmi les radicaux phényle, benzyle ou tolyle.

14. Composé selon la revendication 1, **caractérisé en ce que** y est un nombre entier de 2 à 4.

15. Matériau composite comportant une matrice élastomère et une charge minérale, **caractérisé en ce qu'**il contient un composé selon la revendication 1 comme agent de couplage.

16. Matériau selon la revendication 15, **caractérisé en ce que** la charge minérale est un oxyde, un hydroxyde, un carbonate ou un silicoaluminate.

17. Matériau selon la revendication 15, **caractérisé en ce que** la charge minérale est un matériau métallique choisi parmi les aciers, l'aluminium et le cuivre.

18. Procédé de préparation d'un composé selon la revendication 7 dans lequel chacun des groupes R est un alkyle Ra et z=4, **caractérisé en ce que** :
- au cours d'une première étape, on fait régir le trialcoxyphosphonate P(ORa)₃ (VI) avec le dibromoalcane Br-(CH₂)_{y}-Br (VII) à une température de l'ordre de 140°C pour obtenir Br-(CH₂)_{y}-P(O)(ORa)₂ (VIII)
- au cours d'une seconde étape, on fait réagir le phosphonate Br-(CH₂)_{y}-P(O)(ORa)₂ (VIII) avec Na₂S₄ sous reflux du méthanol, pour obtenir le composé (RaO)₂P(O)-(CH₂)_{y}-S₄-(CH₂)_{y}-P(O)(ORa)₂ (IIa).

19. Procédé de préparation d'un composé selon la revendication 7 dans lequel chacun des groupes R est un trialkylsilyle R'₃Si-, **caractérisé en ce qu'**il consiste à faire réagir le composé (RaO)₂P(O)-(CH₂)_{y}-S₄-(CH₂)_{y}-P(O)(ORa)₂ (IIa) avec un bromure de trialkylsilane R'₃SiBr dans un rapport molaire 1/4, pour obtenir le composé (IIb) (R'₃SiO)₂P(O)-(CH₂)_{y}-S₄-(CH₂)_{y}-P(O)(OSiR'₃)₂.

20. Procédé de préparation d'un composé selon la revendication 7 dans lequel R est H, **caractérisé en ce qu'**il consiste à effectuer une hydrolyse d'un composé (RaO)₂P(O)-(CH₂)_{y}-S₄-(CH₂)_{y}-P(O)(ORa)₂, dans lequel Ra est un alkyle, ou une hydrolyse ou une alcoolyse d'un composé (R'₃SiO)₂P(O)-(CH₂)_{y}-S₄-(CH₂)_{y}-P(O)(OSiR'₃)₂.

21. Procédé de préparation d'un composé selon la revendication 10 dans lequel R représente H, **caractérisé en ce que** :
- au cours d'une première étape, on fait réagir P(O)Cl₃ avec HO(CH₂)_{y}Cl en proportions stoechiométriques pour obtenir le composé Cl(CH₂)_{y}OP(O)Cl₂ ;
- au cours d'une deuxième étape, on hydrolyse le composé Cl(CH₂)_{y}OP(O)Cl₂ pour obtenir le composé Cl(CH₂)_{y}OPO₃H₂ ;
- au cours d'une troisième étape, on fait réagir Cl(CH₂)_{y}OPO₃H₂ avec Na₂S₄ sous reflux du méthanol, puis on fait un échange d'ions pour obtenir le composé (HO)₂P(O)-O-(CH₂)_{y}-S_{z}(CH₂)_{y}-O-P(O)(OH)₂-

## Claims

1. A compound corresponding to the formula:
(RO)₂₋ₜR¹ ₜP(O)-Oₓ-(CH₂)_{y}-S_{z}-(CH₂)_{y}-Oₓ-P(O)(OR)₂₋ₜR¹ ₂ (I)
in which:
• R represents a hydrogen, an alkyl, an aryl, a trialkylsilyl, a trialkylamino or an alkali metal;
• R¹ represents an alkyl or an aryl;
• x is 0 or 1;
• y is an integer from 1 to 22;
• z ≥ 3;
• t is 0 or 1.

2. The compound as claimed in claim 1, **characterized in that** R is an alkyl radical having from 1 to 6 carbon atoms.

3. The compound as claimed in claim 1, **characterized in that** R is trialkylsilyl group R'₃Si- in which the R' substituents represent identical or different alkyl groups having from 1 to 3 carbon atoms.

4. The compound as claimed in claim 1, **characterized in that** R is a trialkylamino group R"₃N- in which the R" substituents represent identical or different alkyl groups having from 1 to 5 carbon atoms.

5. The compound as claimed in claim 1, **characterized in that** R is an alkali metal chosen from Na and K.

6. The compound as claimed in claim 1, **characterized in that** x = 0.

7. The compound as claimed in claim 6, **characterized in that** it corresponds to the formula
(RO)₂P(O)-(CH₂)_{y}-S_{z}-(CH₂)_{y}-P(O) (OR)₂ (II).

8. The compound as claimed in claim 6, **characterized in that** it corresponds to the formula
(RO)R¹P(O)-(CH₂)_{y}-S_{z}-(CH₂)_{y}-P(O) (OR) R' (IV).

9. The compound as claimed in claim 1, **characterized in that** x = 1.

10. The compound as claimed in claim 9, **characterized in that** it corresponds to the formula
(RO)₂P(O)-O-(CH₂)_{y}-S_{z}-(CH₂)_{y}-O-P(O)(OR)₂ (III).

11. The compound as claimed in claim 9, **characterized in that** it corresponds to the formula
(RO)R¹P(O)-O-(CH₂)_{y}-S_{z}-(CH₂)_{y}-O-P(O)(OR)R¹ (V).

12. The compound as claimed in claim 1, **characterized in that** z is on average equal to 4.

13. The compound as claimed in claim 1, **characterized in that** R¹ is an alkyl radical having from 1 to 18 carbon atoms or an aryl radical chosen from the phenyl, benzyl or tolyl radicals.

14. The compound as claimed in claim 1, **characterized in that** y is an integer from 2 to 4.

15. A composite material comprising an elastomeric matrix and an inorganic filler, **characterized in that** it comprises a compound as claimed in claim 1 as coupling agent.

16. The material as claimed in claim 15, **characterized in that** the inorganic filler is an oxide, a hydroxide, a carbonate or a silicoaluminate.

17. The material as claimed in claim 15, **characterized in that** the inorganic filler is a metallic material chosen from steels, aluminum and copper.

18. A process for the preparation of a compound as claimed in claim 7 in which each of the R groups is an alkyl Ra and z = 4, **characterized in that**:
- during a first stage, the trialkoxyphosphonate P(ORa)₃ (VI) is reacted with the dibromoalkane Br-(CH₂)_{y}-Br (VII) at a temperature of the order of 140°C in order to obtain Br-(CH₂)_{y}-P(O)(ORa)₂ (VIII),
- during a second stage, the phosphonate Br-(CH₂)_{y}-P(O)(ORa)₂ (VIII) is reacted with Na₂S₄ under reflux of the methanol in order to obtain the compound (RaO)₂P(O)- (CH₂)_{y}-S₄-(CH₂)_{y}-P(O) (ORa)₂ (IIa).

19. A process for the preparation of a compound as claimed in claim 7 in which each of the R groups is a trialkylsilyl R'₃Si-, **characterized in that** it consists in reacting the compound (RaO)₂P(O)-(CH₂)_{y}-S₄-(CH₂)_{y}-P(O) (ORa)₂ (IIa) with a trialkylsilyl bromide R'₃SiBr in a 1/4 molar ratio in order to obtain the compound (IIb) (R'₃SiO)₂P(O)-(CH₂)_{y}-S₄-(CH₂)_{y}-P(O)(OSiR'₃)₂.

20. A process for the preparation of a compound as claimed in claim 7 in which R is H, **characterized in that** it consists in hydrolyzing a compound
(RaO)₂P(O)-(CH₂)_{y}-S₄-(CH₂)_{y}-P(O)(ORa)₂ in which Ra is an alkyl or hydrolyzing or alcoholyzing a compound
(R'₃SiO)₂P(O)-(CH₂)_{y}-S₄-(CH₂)_{y}-P(O) (OSiR'₃)₂.

21. A process for the preparation of a compound as claimed in claim 10 in which R represents H, **characterized in that**:
- during a first stage, P(O)Cl₃ is reacted with HO(CH₂)_{y}Cl in stoichiometric proportions in order to obtain the compound Cl (CH₂)_{y}OP(O)Cl₂;
- during a second stage, the compound Cl(CH₂)_{y}OP(O)Cl₂ is hydrolyzed in order to obtain the compound Cl(CH₂)_{y}OPO₃H₂;
- during a third stage, Cl(CH₂)_{y}OPO₃H₂ is reacted with Na₂S₄ under reflux of the methanol and then an ion exchange is carried out in order to obtain the compound (HO)₂P(O)-O-(CH₂)_{y}-S_{z}-(CH_{z})_{y}-O-P(O)(OH)₂.

## Patentansprüche

1. Verbindung der Formel
(RO)₂₋ₜR¹ ₜP(O)-Oₓ-(CH₂)_{y}-S_{z}-(CH₂)_{y}-OₓP(O)(OR)₂₋ₜR¹ ₜ (I)
worin:
- R für Wasserstoff, Alkyl, Aryl, Trialkylsilyl, Trialkylamino oder ein Alkalimetall steht,
- R¹ für Alkyl oder Aryl steht,
- x = 0 oder 1 ist,
- y eine ganze Zahl von 1 bis 22 ist,
- z ≥ 3 ist,
- t = 0 oder 1 ist.

2. Verbindung nach Anspruch 1, **dadurch gekennzeichnet, dass** R ein Alkylrest mit 1 bis 6 Kohlenstoffatomen ist.

3. Verbindung nach Anspruch 1, **dadurch gekennzeichnet, dass** R eine Trialkylsilylgruppe R'₃Si- ist, worin die Substituenten R' für gleiche oder unterschiedliche Alkylgruppen mit 1 bis 3 Kohlenstoffatomen stehen.

4. Verbindung nach Anspruch 1, **dadurch gekennzeichnet, dass** R eine Trialkylaminogruppe R"₃N- ist, worin die Substituenten R" für gleiche oder unterschiedliche Alkylgruppen mit 1 bis 5 Kohlenstoffatomen stehen.

5. Verbindung nach Anspruch 1, **dadurch gekennzeichnet, dass** R ein Alkalimetall, ausgewählt aus Na und K, ist.

6. Verbindung nach Anspruch 1, **dadurch gekennzeichnet, dass** x = 0 ist.

7. Verbindung nach Anspruch 6, **dadurch gekennzeichnet, dass** sie der Formel (RO)₂P(O)-(CH₂)_{y}-S_{z}-(CH₂)_{y}-P(O)(OR)₂ (II) entspricht.

8. Verbindung nach Anspruch 6, **dadurch gekennzeichnet, dass** sie der Formel (RO)R¹P(O)-(CH₂)_{y}-S_{z}-(CH₂)_{y}-P(O)(OR)R¹ (IV) entspricht.

9. Verbindung nach Anspruch 1, **dadurch gekennzeichnet, dass** x = 1 ist.

10. Verbindung nach Anspruch 9, **dadurch gekennzeichnet, dass** sie der Formel (RO)₂P(O)-O-(CH₂)_{y}-S_{z}-(CH₂)_{y}-O-P(O)(OR)₂ (III) entspricht.

11. Verbindung nach Anspruch 9, **dadurch gekennzeichnet, dass** sie der Formel (RO)R¹P(O)-O-(CH₂)_{y}-S_{z}-(CH₂)_{y}-O-P(O)(OR)R¹ (V) entspricht.

12. Verbindung nach Anspruch 1, **dadurch gekennzeichnet, dass** z im Mittel gleich 4 ist.

13. Verbindung nach Anspruch 1, **dadurch gekennzeichnet, dass** R¹ ein Alkylrest mit 1 bis 18 Kohlenstoffatomen oder ein Arylrest, ausgewählt aus den Resten Phenyl, Benzyl und Tolyl, ist.

14. Verbindung nach Anspruch 1, **dadurch gekennzeichnet, dass** y eine ganze Zahl von 2 bis 4 ist.

15. Verbundmaterial, umfassend eine Elastomermatrix und einen mineralischen Füllstoff, **dadurch gekennzeichnet, dass** es eine Verbindung nach Anspruch 1 als Bindemittel enthält.

16. Material nach Anspruch 15, **dadurch gekennzeichnet, dass** der mineralische Füllstoff ein Oxid, ein Hydroxid, ein Carbonat oder ein Silicoaluminat ist.

17. Material nach Anspruch 15, **dadurch gekennzeichnet, dass** der mineralische Füllstoff ein Metallmaterial, ausgewählt aus Stählen, Aluminium und Kupfer, ist.

18. Verfahren zur Herstellung einer Verbindung nach Anspruch 7, worin jede der Gruppen R ein Alkyl Ra ist und z = 4 ist, **dadurch gekennzeichnet, dass**:
- im Verlauf einer ersten Stufe ein Trialkoxyphosphonat P(ORa)₃ (VI) mit einem Dibromalkan Br-(CH₂)_{y}-Br (VII) bei einer Temperatur von etwa 140 °C umgesetzt wird, um Br-(CH₂)_{y}-P(O)(ORa)₂ (VIII) zu erhalten,
- im Verlauf einer zweiten Stufe das Phosphonat Br-(CH₂)_{y}-P(O)(ORa)₂ VIII) unter Methanolrückfluss mit Na₂S₄ umgesetzt wird, um die Verbindung (RaO)₂P(O)-(CH₂)_{y}-S₄-(CH₂)_{y}-P(O)(ORa)₂ (Ila) zu erhalten.

19. Verfahren zur Herstellung einer Verbindung nach Anspruch 7, worin jede der Gruppen R ein Trialkylsilyl R'₃Si- ist, **dadurch gekennzeichnet, dass** es darin besteht, die Verbindung (RaO)₂P(O)-(CH₂)_{y}-S₄-(CH₂)_{y}-P(O)(ORa)₂ (IIa) mit einem Trialkylbromsilan R'₃SiBr in einem Molverhältnis 1:4 umzusetzen, um die Verbindung (R'₃SiO)₂P(O)-(CH₂)_{y}-S₄-(CH₂)_{y}-P(O)(OSiR'₃)₂ (IIb) zu erhalten.

20. Verfahren zur Herstellung einer Verbindung nach Anspruch 7, worin R H ist, **dadurch gekennzeichnet, dass** es darin besteht, eine Hydrolyse einer Verbindung (RaO)₂P(O)-(CH₂)_{y}-S₄-(CH₂)_{y}-P(O)(ORa)₂, in der Ra ein Alkyl ist, oder eine Hydrolyse oder eine Alkoholyse einer Verbindung (R'₃SiO)₂P(O)-(CH₂)_{y}-S₄-(CH₂)_{y}-P(O)(OSiR'₃)₂ durchzuführen.

21. Verfahren zur Herstellung einer Verbindung nach Anspruch 10, worin R für H steht, **dadurch gekennzeichnet, dass**:
- im Verlauf einer ersten Stufe P(O)Cl₃ mit HO(CH₂)_{y}Cl in stöchiometrischem Verhältnis umgesetzt wird, um die Verbindung Cl(CH₂)_{y}OP(O)Cl₂ zu erhalten;
- im Verlauf einer zweiten Stufe die Verbindung Cl(CH₂)_{y}OP(O)Cl₂ hydrolysiert wird, um die Verbindung Cl(CH₂)_{y}OPO₃H₂ zu erhalten;
- im Verlauf einer dritten Stufe Cl(CH₂)_{y}OPO₃H₂ unter Methanolrückfluss mit Na₂S₄ umgesetzt wird und anschließend ein Ionenaustausch erfolgt, um die Verbindung (HO)₂P(O)-O-(CH₂)_{y}-S_{z}-(CH₂)_{y}-O-P(O)(OH)₂ zu erhalten.
